(19) Europäisches Patentamt
European Patent Office
Office européen des brevets

(11) **EP 0 424 922 B1**

## (12) EUROPEAN PATENT SPECIFICATION

(45) Date of publication and mention
of the grant of the patent:
**22.01.1997 Bulletin 1997/04**

(51) Int Cl.6: **D01F 9/127**

(21) Application number: **90120427.1**

(22) Date of filing: **24.10.1990**

(54) **Carbonaceous fibers and production process therefor**

Kohlenstoffartige Fasern und Verfahren zu ihrer Herstellung

Fibres carboneuses et procédé pour leur fabrication

(84) Designated Contracting States:
**DE FR GB**

(30) Priority: **24.10.1989 JP 276227/89**
**02.11.1989 JP 286673/89**

(43) Date of publication of application:
**02.05.1991 Bulletin 1991/18**

(73) Proprietor: **Mitsubishi Chemical Corporation**
**Chiyoda-ku Tokyo (JP)**

(72) Inventors:
• **Murayama, Hideki**
**Arlington, Massachusetts 02174 (US)**
• **Maeda, Toshikatsu**
**Komae-shi, Tokyo (JP)**

(74) Representative:
**Wächtershäuser, Günter, Prof. Dr.**
**Patentanwalt,**
**Tal 29**
**80331 München (DE)**

(56) References cited:
• **NATURE, vol. 345, 28th June 1990, pages 791-793, MacMillan Journals Ltd, London, GB; H. MARUYAMA et al.: "A novel form of filamentous graphite"**
• **CARBON, vol. 11, no. 6, December 1973, pages 583-590, Pergamon Press, Oxford, GB; H.P. BOEHM: "Carbon from carbon monoxide disproportionation on nickel and iron catalysts: morphological studies and possible growth mechanisms"**

Remarks:
The file contains technical information submitted after the application was filed and not included in this specification

## Description

The present invention concerns carbonaceous fibers by a gas phase method and, more in particular, it relates to a gas phase grown carbonaceous fibers having a specific microstructure formed under the catalytic effect of fine metal particles. Since the carbonaceous fibers according to the present invention have a unique microstructure and high degree of graphitization, they can be used as material particularly suitable to electroconductive material, heat conductive material, catalyst carrier, graphite lubricant and host material for inter-graphite layer compound.

Carbon materials can be used by properly designing the structure and form for materials of excellent mechanical properties, electroconductivity and heat conductivity. In recent years, carbon materials fabricated into fibers have been used generally, being coupled with their reduced weight, to various kinds of composite materials, for example, with resins, metals and ceramics. Fibrous carbon is mainly produced by a method of spinning polyacrylonitrile or pitch into fibers and then infusibilizing and sintering them, but there is a limit for controlling the microstructure thereof. On the other hand, it has been known that fibrous carbon having a microstructure not obtained by the spinning process for method can be prepared by a gas phase method. Various fibrous carbon materials formed by means of the gas phase method have been known so far including those in which:

(1) having a form in which carbon network planes are wound like that in rolling paper (R. Bacon; J. Appl. Phys., 31, 283 (1960)),

(2) comprising carbon net planes laminated concentrically and formed, as a whole, into a cylindrical shape with vacant pores (Tsuneo Koyama, Morinobu Endo; Appl. Phys., 42(7), 690 (1973)),

(3) comprising frustum conical carbon net planes laminated as a whole, into a cylindrical shape (for example, M. Audier and M. Coulon; Carbon 23, 317 (1985), Morinobu Endo, Tsuneo Koyama; Japanese Unexamined Patent Publication No. 197314/1983), and

(4) having a high porous inner structure in which columnar carbon layers in parallel with the growing direction are present at four corners and 5 to 20 carbon layers are folded vertically to the growing direction so as to bridge the above-mentioned carbon layers (M. Murakami and S. Yoshimura; J. Chem. Soc., Chem. Commun., 1649 (1984)).

As the starting material for forming fibrous carbon from a gas phase, hydrocarbons such as benzene or methane, or carbon monoxide can be used mainly and it is generally recognized that use of hydrocarbons is more excellent with a viewpoint of selective production of fibrous carbon or industrialization of the production. Most of examples in the prior art are fibrous carbon obtained by starting from hydrocarbons and, in particular, those mentioned in (4) above were discovered by using a specific starting hydrocarbon material which is an aromatic diacid anhydride. There are great many experiments have been also carried out so far regarding the reaction of depositing carbon from carbon monoxide and it has already been known that cylindrical fibers mentioned in (2) above or fibers of the structure comprising laminated frustum conical carbon layers mentioned in (3) above can be obtained also from carbon monoxide (refer, for example, to Baker and Harris; Chemistry and Physics of Carbon, Vol 14 (1978)). However, they are usually obtained often as a mixture of various forms of carbonaceous material in which other non-fibrous carbons are mixed. As the fibrous carbonaceous material obtained from carbon monoxide confirmed so far, there can mentioned fibers of cylindrical shape or fibers of the structure comprising laminated frustum conical carbon layers as described above, as well as fibers in spiral or crimped form.

However, it has generally been considered that the optimum temperature for the heat treatment in the carbon depositing reaction using carbon monoxide as the starting material is about 550°C. A mixture of amorphous carbon and fibrous carbon is likely to be formed at a temperature lower than 400°C, while production of plate-like products is predominant at a higher temperature and it is difficult to preferentially form only the fibrous carbon. Further, most of the resultant fibers have crimped or irregularly crooked forms and they are not so much interested as materials of particular importance in view of structure and function. H.P. Boehm reports that fibers of a ribbon-like form are partially present in carbon deposited from carbon monoxide and considers for the microstructure of the fibers that the carbon net planes are oriented in perpendicular to or in parallel with the longitudinal direction and that the possibility of vertical orientation is rather high in "Carbon" 11, 583 (1973). However, no actual consideration has been made for confirming the microstructure and there is no descriptions for concrete structures. Further, since most of the resultant products are fibers of an irregularly crooked form and their yield is low, it is uncertain what is the features of the carbonaceous material. Since the carbon deposition reaction from carbon monoxide is generally exothermic and equilibrium reactions, the equilibrium constant is.reduced to lower the production yield if the temperature is higher and the reaction rate is remarkably reduced as the temperature is lower. Accordingly, in view of qualitative and quantitative point of view, it has been considered difficult to industrialize the formation of fibrous carbon starting from carbon monoxide.

The present inventors have made various studies on the selective production of fibrous carbon from carbon monoxide and, in particular, industrial production of fibrous carbon having a novel microstructure. As a result, it has been found that not only the composition and the temperature for the starting material gas but also the composition and the shape of the catalyst nuclei give an important effect on the microstructure and the form of the resultant carbon and found that catalyst nuclei having a flat carbon depositing surface can provide a ribbon-like carbon fibers in which carbon net planes are laminated in perpendicular to the growing direction of fibers starting from carbon monoxide as well as that the ribbon-like carbon fibers can be produced at a good yield.

It is, accordingly, an object of the present invention to provide carbonaceous fibers having a novel shape and a microstructure not confirmed so far and capable of developing unique functions, as well as a production process therefor.

The foregoing object of the present invention can be attained easily with carbonaceous fibers comprising carbon net planes laminated substantially in perpendicular to the growing direction of fibers, with the inter-plane distance $(d_{(002)})$ ranging from 0.3354 to 0.3380 nm (3.354 to 3.380 Å), the point of 0.3380 nm (3.380 Å) being excluded, having no substantial vacant pores, and having a fiber cross section of rectangular or flat elliptic in which the longer axis is at least twice of the shorter axis in the cross section.

The foregoing carbonaceous fibers of the present invention can be obtained by a process for producing carbonaceous fibers, which comprises applying a heat treatment to a starting gas mixture of carbon monoxide and hydrogen in the presence of fine catalyst particles comprising a metal compound, wherein

(1) the starting gas mixture used comprises from 0.5 to 3 mols of hydrogen based on one mol carbon monoxide,
(2) the metal compound is contained, as a metal element, by from 1 to 30% by weight based on 100% by weight of the total amount of carbon contained in the starting carbon,
(3) the heat treatment is applied at a temperature range from 450 to 1000°C, and
(4) the carbon depositing surface of fine catalyst particles for forming the carbonaceous fibers is substantially flat and the fibers are grown substantially in perpendicular to the depositing surface.

These and other objects, as well as advantageous features of the present invention will become apparent by reading the following descriptions for the preferred embodiments according to the present invention with reference to the accompanying drawings, wherein

Figure 1 is a SEM photograph (x 14,000) showing the texture of ribbon-like carbonaceous fibers according to the present invention;
Figures 2(a) and 2(b) are, respectively, a TEM photograph (x 80,000) showing the structure of carbonaceous fibers according to the present invention and a TEM photograph (x 4,800,000) showing a portion of the carbon depositing surface of a catalyst nucleus present at the top end of the carbonaceous fiber and a microstructure of deposited carbon fibers;
Figure 3 is a schematic explanatory view for an experimental device used for the production of carbonaceous fibers according to the present invention; and
Figures 4 and 5 are, respectively, a TEM photograph (x 1,200,000) showing the carbon layer of carbonaceous fibers and a SEM photograph (x 100,000) showing the form of the carbonaceous fibers according to the present invention.

The fibrous carbon material of the present invention is gas phase grown fibrous carbon in which carbon net planes are laminated substantially in perpendicular to the growing direction of fibers, void pores usually found in gas phase grown carbon fibers are not present, and the cross sectional shape of the fibers is not circular but rectangular or flat elliptic similar to the rectangular shape and has a ribbon-like form as a whole. The flat shape means herein that the long/short axis ratio in the fiber cross section is at least twice, preferably, from 5 to 15 times.

The ribbon-like carbonaceous fibers have a feature that the degree of graphitization of the fiber constituting carbon layers is already high upon fiber formation and the inter-plane distance $(d_{(002)})$ of the laminated carbon net planes is from 0.3354 to 0.3380 nm (3.354 to 3.380 Å), the point of 0.3380 nm (3.380 Å) being excluded. Referring to one example, the fibrous carbon according to the present invention formed at a reaction temperature of 700°C shows a value: $d_{(002)} = 0.3366$ nm (3.366 Å) as a result of X-ray diffractiometry. This is a value corresponding to the gas phase grown carbon fibers (cylindrical fibers of a concentric cross section and having vacant pores) prepared by using a hydrocarbon as the starting material, which have the best graphitizing property among fibrous carbon materials and which were treated at 2400°C, and this is a value that can be attained in the meso phase pitch type carbon fibers that are considered to have relatively high graphitizing property only when a heat treatment is applied at a temperature higher than 3000°C (refer to Tsuneo Koyama, Morinobu Endo, Industrial Material, 30(7), 109 (1982). A relationship between the inter-plane distance d(002) for the carbon net plane and the degree of graphitization $\underline{g}$ is introduced as below by the carbon structure model of Mering and Maire:

$$d_{(002)} = 0.1 * (3.354 \, g + 3.44 \, (1\text{-}g) \, (in \, nm) \, (3.354 \, g + 3.44 \, (1\text{-}g) \, (in \, \text{Å}))$$

When

$$d_{(002)} = 0.3366 \, nm \, (3.366 \, \text{Å})$$

is substituted for the equation, the degree of graphitization of the ribbon-like carbonaceous fibers is estimated to be 86% and it is found that they are carbonaceous fibers of high degree of graphitization.

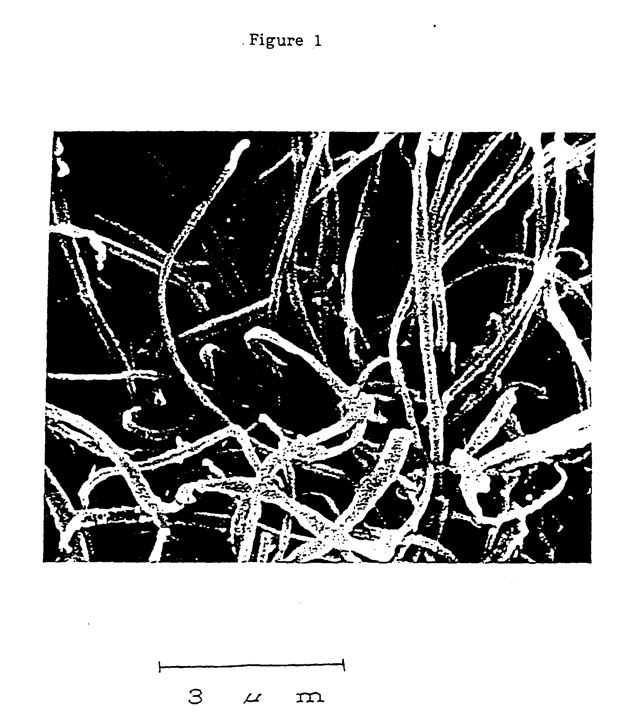

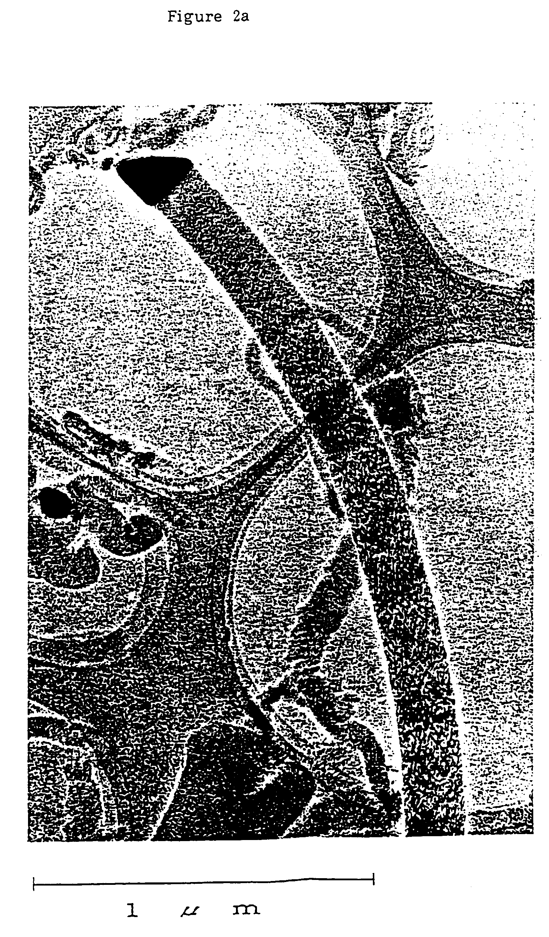

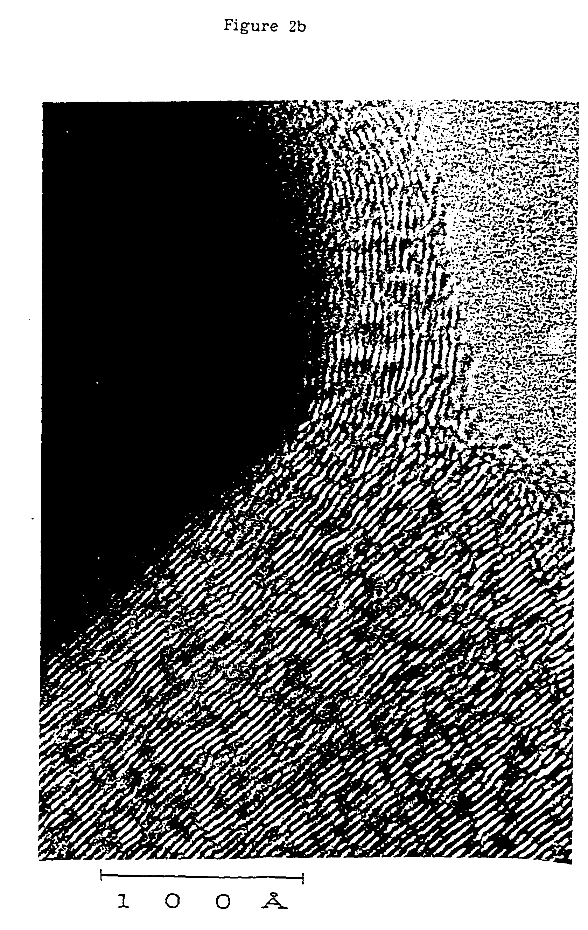

The ribbon-like carbonaceous fibers according to the present invention have from 1 to 100 µm, preferably, 5 to 50 µm of length and from 0.05 to 1 µm, preferably, 0.1 to 0.7 µm of width. As shown in Figure 1, most of them have a shape of relatively straight or moderately curved but there are also some fibers bent at their intermediate portion. Further, as shown in Figure 2a, the fibers of the present invention contain no vacant pores as found in the usual gas phase grown carbon fibers and the carbon layers are laminated uniformly with no gaps as a result of TEM observation. A fine particle as the growing catalyst is present at the top end of the fiber. For the shape of the fine catalyst particles, while various shapes such as rectangular or semi-circular are observed in addition to the trigonal shape as shown in Figure 2a, a feature in common with all of them is that the fine particle has a flat carbon depositing surface. Figure 2b is an enlarged electron microscopic photograph for a portion of the carbon depositing surface of the catalyst nucleus shown in Figure 2a, in which it can be seen that fibers are grown in such a way that carbon layers are laminated in perpendicular to the fiber growing direction from the flat surface of the catalyst nucleus. Further, the fibrous carbon has a smaller apparent crystal size as from 3 to 50 nm (30 to 500 Å), preferably, 5 to 30 nm (50 to 300 Å) of $Lc_{(002)}$ as compared with usual gas phase grown carbon fibers. Further, it has a feature that many oxygen atoms are bonded to the edge carbon and the ratio of oxygen to carbon is more than 0.5% by weight and, preferably, from 1 to 10% by weight as a result of the atom analysis and the measurement for the gas composition upon vaporization by heating (vaporization at 950°C for 30 min). Oxygen may be removed by applying a heat treatment in an inert gas or under vacuum.

The fibrous carbon according to the present invention can be produced as shown below. Carbon monoxide is used as the starting carbon material, which is reacted under the presence of hydrogen by using fine particles of a transition metal as a fiber growing catalyst. It is necessary that a hydrocarbon gas is present together in addition to carbon monoxide in the starting gas. Since the formation of the ribbon-like carbon fibers is suppressed as the hydrogen ratio goes lower, it can be seen that hydrogen has an important role for the activity of the fiber growing catalyst. Further, in addition to the increase for the catalytic activity, the hydrogen also has a function of reacting with carbon dioxide formed simultaneously upon forming fibrous carbon by disproportionation reaction of carbon monoxide to form water thereby decreasing carbon dioxide in the reaction system and, accordingly, promoting the carbon depositing reaction from carbon monoxide. Therefore, carbon can be deposited at a higher yield as compared with the case of using only carbon monoxide. However, if the hydrogen gas ratio is excessively high, the partial pressure of the carbon monoxide is decreased to reduce the reaction efficiency. Accordingly, the practical ratio of hydrogen to carbon monoxide in the starting gas is selected from 0.5 to 3.0 (molar ratio). Further, in addition to carbon monoxide, hydrogen and catalyst starting material, other substances may be added in the starting gas. Rare gas belonging to Group 0 in the periodic table such as argon or helium, nitrogen, steam, etc. may be contained as the starting gas ingredient in such an amount as providing higher pressure than the partial pressure of hydrogen. Further, a hydrocarbon or hydrocarbon containing hetero atoms such as oxygen or nitrogen may be present together. Further, it is desirable to control the oxygen gas to less than 10%. As described above, although various gases may be present together in the system, for the purpose of forming the ribbon-like carbonaceous fibers effectively, it is desired that the contents of carbon monoxide and hydrogen are as high as possible in the starting gas, preferably, each by more than 15% by volume. As the transition metal used for the catalyst in the present invention, there can be mentioned scandium, titanium, vanadium, chromium, manganese, iron, cobalt, nickel, yttrium, zirconium, niobium, molybdenum, ruthenium, rhodium, palladium, tantalum, tungsten, rhenium, iridium and platinum. Among them, particularly preferred are those belonging to Group VIII of the periodic table, iron, nickel and cobalt being particularly preferred. Particularly, iron is a metal having highest activity to the formation of the ribbon-like carbonaceous fibers. It is necessary that the above-mentioned catalyst element is present in the form of fine particles as an element or a compound in the reaction system. For this purpose, previously prepared fine particles may be introduced into the reaction system, as well as a method of forming fine particles in a build-up manner in the reaction system may be used. This is a method of using a volatile metal compound as the starting material for the catalyst, thermally decomposing the compound to release metal atoms, growing the metal atoms from a cluster further to fine particles to form a reaction catalyst. As the suitable compound for the starting material for the catalyst is, specifically, an organic metal compound such as metallocene, chloride or carbonyl compound. Referring for example to iron which is most suitable as the catalyst element, $(C_5H_5)_2Fe$, $FeC\ell_3$, $Fe(CO)_5$ can be mentioned as typical examples.

Among them, $Fe(CO)_5$ is suitable as the catalyst material since the heat decomposition products thereof are iron and carbon monoxide, and they do not complicate the system in the relevant reaction using carbon monoxide as a carbon source. For properly forming catalyst particles and selective growing of fibers subsequent thereto, the amount of the catalyst material charged in the reaction system, is from 1 to 30% by weight, preferably, 1 to 20% by weight (as metal) based on the 100% by weight of the total carbon in the starting gas mixture. The reaction temperature is appropriately from 450 to 1000°C, preferably, 550 to 800°C. If the temperature is lower, the yield of the ribbon-like carbon fibers is reduced. It is considered that when the catalyst material is thermally decomposed and metal atoms are grown to a cluster and, further, into fine particles, by controlling a temperature, the density of the starting material for a catalyst and the partial pressure of monoxide and hydrogen to appropriate conditions, the resultant fine particles are grown into a shape and a size suitable as a catalyst while forming appropriate carbon depositing surface and are brought into a reaction range of the disproportionation of carbon monoxide at a good timing, thereby forming the ribbon-like carbonaceous fibers effectively.

EXAMPLE

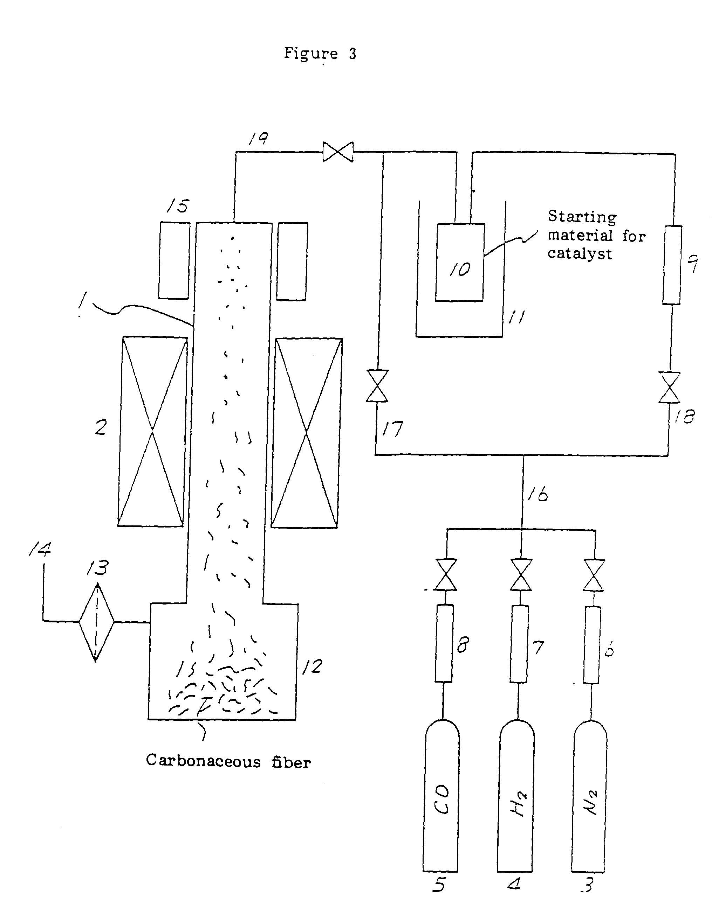

The outline of a device used for the production of fibrous carbon in the present invention is shown in Figure 3.

In Figure 3, a gas cylinder 3 is filled with a nitrogen gas, a gas cylinder 4 is filled with a high purity hydrogen gas and a gas cylinder 5 is filled with a high purity carbon monoxide gas. Flow rates for the gases are controlled by the flow meters 6, 7, 8 respectively. Liquid starting material for catalyst is contained in a gas generator 10 and maintained at a predetermined temperature by a constant temperature bath 11. Gases supplied from the cylinders are passed through a pipe 16 which is branched into a pipe 17 and a pipe 18. The gases flowing through the pipe 18 is introduced by way of a flow rate meter 9 to the gas generator 10 and then delivered together with a gasified starting material for the catalyst from the generator 10. The delivered gas is mixed with the gases passing through the bypass pipe 17 and then charged by way of a pipe 19 into a tubular reactor 1. Heat insulator or heater 15 may be disposed, if necessary, to the inlet of the tubular reactor 1. The tubular reactor 1 is a quartz tube of 90 mm inner diameter and 1500 mm length and it is disposed in an electric furnace 2 having 600 mm length of heating portion. A collector 12 for the resultant fibers is disposed to the final end of the tubular reactor 1, and off gases are exhausted by way of a filter 13 from the gas exit 14. The reaction system is initially replaced with a nitrogen gas upon operation to prevent explosion danger. Subsequently, the electric furnace 2 is heated to a predetermined temperature and a gas mixture of hydrogen and carbon monoxide supplied from the cylinders 4 and 5 are charged by way of the pipe 16, the bypass pipe 17 and the pipe 19 into the tubular reactor 1. When the inside of the tubular reactor is filled with a $CO/H_2$ mixed gas atmosphere, a predetermined amount of $CO/H_2$ gas is passed by way of the flow rate meter 9 into the gas generator 10 filled with the material for the catalyst, which is mixed with the $CO/H_2$ gas by way of the bypass pipe 17 and then supplied from the pipe 19 to the tubular reactor 1 to start the reaction.

EXAMPLE 1

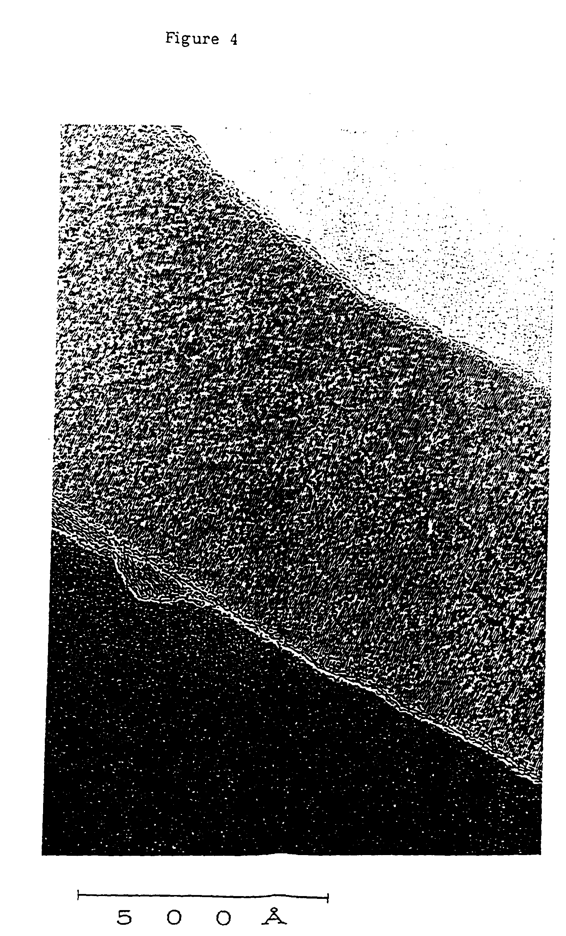

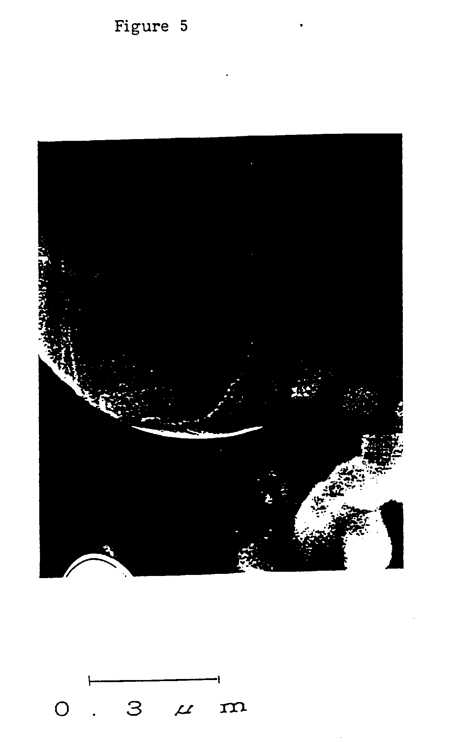

Fibrous carbon was prepared by using the device shown in Figure 3. $H_2$ and CO were released from the cylinders 4 and 5 to prepare a gas mixture: $CO/H_2 = 50/50$ and supplied at 60 1/hr (converted as 25°C, 1 atm) to prepare a starting gas mixture. $Fe(CO)_5$ was used as a catalyst material and supplied at 4.5 g/hr so that the weight ratio of iron relative to the total amount of carbon supplied including CO generated from $Fe(CO)_5$ is $C:Fe = 100:7.5$. When the gas mixture of CO, $H_2$ and $Fe(CO)_5$ was continuously flown and passed through the tubular reactor 1 which was elevated to a temperature of 700°C, fibrous carbon was obtained at 7 g/hr. The recovery yield of carbon relative to the theoretical carbon deposition amount calculated from the equilibrium value in the disproportionation of CO at 700°C was 120%. Further, since formation of steams was observed in the reaction, it is considered that conversion ratio of CO to carbon was improved as a whole by the fact that $H_2$ present in the reaction system was reacted with $CO_2$ which was formed upon deposition of carbon from CO thereby forming $H_2O$ and CO. As a result of the electron microscopic observation, the resultant product comprises more than 50% of the ribbon-like carbonaceous fibers, 30% of fine columnar fibers with a diameter of less than 0.05 μm and about 20% of crimped fibers with a diameter of from 0.1 to 0.5 μm. Figure 4 shows a TEM photograph for the resultant ribbon-like carbonaceous fibers. The carbon layer was laminated in perpendicular to the growing direction of the fibers and there was no vacant pores. According to SEM observation, the ribbon-like carbonaceous fibers had from 0.05 to 0.7 μm of width, in which fibers of 0.1 to 0.4 μm of width were predominant. The long/short axis ratio in the fiber cross section is estimated as not less than 3 and, mostly, from 5 to 10, and the fiber length was from several to several tens micrometers. Figure 5 shows a SEM photograph for the resultant ribbon-like carbonaceous fibers. According to X-ray diffractiometry, the inter-plane distance $d_{(002)}$ for the carbon layer was 0.3366 nm (3.366 Å). Further, as a result of studying the composition of resultant gases upon vaporization by heating the fibers (950°C, 30 min), it was found that oxygen was contained by 29.8 mg per one g of the fibers.

EXAMPLE 2

When the production process was carried out by supplying a gas mixture of $CO/H_2 = 50/50$ at 120 l/hr (converted as 25°C, 1 atm) and $Fe(CO)_5$ at 4.5 g/hr to provide a ratio of C:Fe = 100:3.7 and at a temperature of the electric furnace of 700°C, 6.2 g/hr of fibrous carbon was obtained. The yield for the carbon recovery based on the theoretical carbon deposition amount was 45%. According to an electron microscopic observation, the resultant fibers contained nearly 40% of the same ribbon-like carbon fibers with 0.05 to 0.7 μm of width and several to several tens micrometers of length as in Example 1.

EXAMPLE 3

When the production process was carried out by supplying a gas mixture of $CO/H_2 = 50/50$ at 60 l/hr (converted as 25°C, 1 atm) and $Fe(CO)_5$ at 4.5 g/hr to provide a ratio of C:Fe = 100:7.5 and at a temperature of the electric furnace of 550°C, 5.3 g/hr of fibrous carbon was obtained. The yield for the carbon recovery based on the theoretical carbon deposition amount was 50%. The resultant fibers comprised 10% of the same ribbon-like carbonaceous fibers as in Example 1 with from 0.05 to 0.5 μm of width and from several to several tens micrometers of length as in Example 1, 20% of fine cylindrical fibers and 70% of crimped fibers.

COMPARATIVE EXAMPLE 1

When the production process was carried out in the same procedures as in Example 1 except for lowering the temperature of the electric furnace to 400°C, the yield for the carbon recovery based on the theoretical carbon deposition amount was less than 1% and no ribbon-like carbonaceous fibers were found.

COMPARATIVE EXAMPLE 2

When the production process was carried out in the same procedures as in Example 3 except for not supplying a hydrogen gas, no carbon recovery was found relative to the theoretical carbon deposition amount.

COMPARATIVE EXAMPLE 3

When the production process was carried out in the same procedures as in Example 1 except for setting the ratio: $CO/H_2 = 75/25$ and supplying $Fe(CO)_5$ at 1.5 g/h, the yield for the carbon recovery was as low as 5% relative to the theoretical carbon deposition amount and ribbon-like carbonaceous fibers were found only slightly.

According to the present invention, carbonaceous fibers having a unique structure in which carbon net planes laminated in perpendicular to the growing direction of fibers can be obtained.

**Claims**

1. Carbonaceous fibers comprising carbon net planes laminated substantially in perpendicular to the growing direction of fibers, with the inter-plane distance ($d_{(002)}$) ranging from 0.3354 to 0.3380 nm (3.354 to 3.380 Å), the point of 0.3380 nm (3.380 Å) being excluded, having no substantial vacant pores and having a cross sectional shape of fibers of rectangular or elliptic shape in which the ratio of longer axis relative to the shorter axis in the cross section is at least twice.

2. Carbonaceous fibers as defined in Claim 1, wherein oxygen is contained by not less than 1% by weight based on carbon upon formation of fibers.

3. A process for producing gas phase grown carbonaceous fibers by applying a heat treatment to a starting gas mixture comprising carbon monoxide and hydrogen in the presence of fine catalyst particles comprising a metal compound, wherein

   (1) a starting gas mixture used comprises from 0.5 to 3 mols of hydrogen based on one mol of carbon monoxide,
   (2) the metal compound is contained, as a metal element, by from 1 to 30% by weight based on 100% by weight of the total carbon atom contained in the starting gas,
   (3) the heat treatment is applied within a temperature range from 450°C to 1000°C, and
   (4) the carbon depositing surfaces of fine catalyst particles for forming the carbonaceous fibers are substantially flat and the fibers are grown substantially in perpendicular to said depositing surfaces.

4. A process for producing gas phase grown carbonaceous fibers as defined in Claim 3, wherein each of carbon monoxide and hydrogen in the starting gas mixture is not less than 15% by volume.

5. A process for producing gas phase grown carbonaceous fibers as defined in Claim 3, wherein the metal compound comprises one or more metal elements selected from the group consisting of scandium, titanium, vanadium, chromium, manganese, iron, cobalt, nickel, yttrium, zirconium, niobium, molybdenum, ruthenium, rhodium, palladium, tantalum, tungsten, rhenium, iridium and platinum.

6. A process for producing gas phase grown carbonaceous fibers as defined in Claim 3, wherein the metal compound comprises one or more of metal elements selected from the elements belonging to Group VIII in the periodic table.

7. A process for producing gas phase grown carbonaceous fibers as defined in Claim 3, wherein the metal compound comprises one or more of metal elements selected from the group consisting of iron, cobalt and nickel.

8. A process for producing gas phase grown carbonaceous fibers as defined in Claim 3, wherein the metal compound is an iron compound.

9. A process for producing gas phase grown carbonaceous fibers as defined in Claim 3, wherein the metal compound comprises from one or more of compounds selected from the group consisting of $(C_5H_5)_2Fe$, $FeC\ell_3$ and $Fe(CO)_5$.

10. A process for producing gas phase grown carbonaceous fibers as defined in Claim 3, wherein the metal compound is $Fe(CO)_5$.

11. A process for producing gas phase grown carbonaceous fibers as defined in Claim 3, wherein the gas phase growing temperature is from 550 to 800°C.

## Patentansprüche

1. Kohlenstoffhaltige Fasern, umfassend Kohlenstoffnetzebenen, die im wesentlichen senkrecht zu der Wachstumsrichtung der Fasern laminiert sind, wobei der Zwischenebenenabstand ($d_{(002)}$) im Bereich 0,3354 bis 0,3380 nm (3,354 bis 3,380 Å) liegt, und der Punkt 0,3380 nm (3,380 Å) ausgeschlossen ist, ohne wesentliche unbesetzte Poren und mit einer Faserquerschnittsform von rechteckiger oder elliptischer Form, wobei das Verhältnis von längerer Achse zur kürzeren Achse des Querschnitts mindestens zwei ist.

2. Kohlenstoffhaltige Fasern nach Anspruch 1, wobei Sauerstoff mit nicht weniger als 1 Gewichtsprozent, bezogen auf Kohlenstoff, nach Bildung der Fasern enthalten ist.

3. Verfahren zur Herstellung von kohlenstoffhaltigen Fasern, die in der Gasphase gewachsen sind, durch Anwenden einer Wärmebehandlung auf ein Ausgangsgasgemisch, umfassend Kohlenmonoxid und Wasserstoff, in Gegenwart feiner Katalysatorteilchen, die eine Metallverbindung umfassen, wobei

(1) ein verwendetes Ausgangsgasgemisch 0,5 bis 3 Mol Wasserstoff, bezogen auf ein Mol Kohlenmonoxid, umfaßt,
(2) die Metallverbindung als Metallelement mit 1 bis 30 Gewichtsprozent, bezogen auf 100 Gewichtsprozent der in dem Ausgangsgas insgesamt enthaltenen Kohlenstoffatome, enthalten ist,
(3) die Wärmebehandlung innerhalb eines Temperaturbereichs von 450°C bis 1000°C angewendet wird und
(4) die kohlenstoffabscheidenden Flächen der feinen Katalysatorteilchen zur Bildung der kohlenstoffhaltigen Fasern im wesentlichen eben sind und die Fasern im wesentlichen senkrecht zu den abscheidenden Flächen wachsen.

4. Verfahren zur Herstellung kohlenstoffhaltiger Fasern, die in der Gasphase gewachsen sind, nach Anspruch 3, wobei Kohlenmonoxid und Wasserstoff in dem Ausgangsgasgemisch jeweils nicht weniger als 15 Volumenprozent ausmachen.

5. Verfahren zur Herstellung von kohlenstoffhaltigen Fasern, die in der Gasphase gewachsen sind, nach Anspruch 3, wobei die Metallverbindung ein oder mehrere Metallelemente, ausgewählt aus der Gruppe, bestehend aus Scandium, Titan, Vanadium, Chrom, Mangan, Eisen, Kobalt, Nickel, Yttrium, Zirkonium, Niob, Molybdän, Ruthenium, Rhodium, Palladium, Tantal, Wolfram, Rhenium, Iridium und Platin, umfaßt.

6. Verfahren zur Herstellung von kohlenstoffhaltigen Fasern, die in der Gasphase gewachsen sind, nach Anspruch 3, wobei die Metallverbindung ein oder mehrere Metallelemente, ausgewählt aus Elementen zugehörig zur Gruppe VIII des Periodensystems der Elemente, umfaßt.

7. Verfahren zur Herstellung von kohlenstoffhaltigen Fasern, die in der Gasphase gewachsen sind, nach Anspruch 3, wobei die Metallverbindung ein oder mehrere Metallelemente, ausgewählt aus der Gruppe, bestehend aus Eisen, Kobalt und Nickel, umfaßt.

8. Verfahren zur Herstellung von kohlenstoffhaltigen Fasern, die in der Gasphase gewachsen sind, nach Anspruch 3, wobei die Metallverbindung eine Eisenverbindung ist.

9. Verfahren zur Herstellung von kohlenstoffhaltigen Fasern, die in der Gasphase gewachsen sind, nach Anspruch 3, wobei die Metallverbindung ein oder mehrere Verbindungen, ausgewählt aus der Gruppe, bestehend aus $(C_5H_5)_2Fe$, $FeCl_3$ und $Fe(CO)_5$, umfaßt.

10. Verfahren zur Herstellung von kohlenstoffhaltigen Fasern, die in der Gasphase gewachsen sind, nach Anspruch 3, wobei die Metallverbindung $Fe(CO)_5$ ist.

11. Verfahren zur Herstellung von kohlenstoffhaltigen Fasern, die in der Gasphase gewachsen sind, nach Anspruch 3, wobei die Temperatur zum Wachsen in der Gasphase 550 bis 800°C beträgt.

## Revendications

1. Fibres carbonées comprenant des plans nets de carbone stratifiés sensiblement perpendiculairement à la direction de croissance des fibres, la distance entre les plans ($d_{(002)}$) étant de l'ordre de 0,3354 à 0,3380 nm (3,354 à 3,380 Å), le point à 0,3380 nm (3,380 Å) étant exclus, n'ayant sensiblement aucun pore libre et dont la section transversale des fibres est de forme rectangulaire ou elliptique, le rapport du grand axe sur le petit axe dans la section transversale étant d'au moins deux.

2. Fibres carbonées selon la revendication 1, dans lesquelles la teneur en oxygène n'est pas inférieure à 1 % en poids sur la base du carbone lors de la formation des fibres.

3. Procédé de préparation de fibres carbonées à croissance en phase gazeuse par application d'un traitement thermique à un mélange gazeux de départ comprenant du monoxyde de carbone et de l'hydrogène en présence de fines particules de catalyseur comprenant un composé métallique, dans lequel

(1) un mélange gazeux de départ utilisé comprend de 0,5 à 3 moles d'hydrogène sur la base d'une mole de monoxyde de carbone,
(2) le composé métallique est présent, en tant qu'élément métallique, à raison de 1 à 30 % en poids sur la base de 100 % en poids du carbone atomique total présent dans le gaz de départ,
(3) le traitement thermique est appliqué à une température de l'ordre de 450°C à 1000°C, et
(4) les surfaces de dépôt de carbone des fines particules de catalyseur destinées à former les fibres carbonées sont sensiblement plates et la croissance des fibres est sensiblement perpendiculaire auxdites surfaces de dépôt.

4. Procédé de préparation de fibres carbonées à croissance en phase gazeuse selon la revendication 3, dans lequel chacune des quantités de monoxyde de carbone et d'hydrogène dans le mélange gazeux de départ n'est pas inférieure à 15 % en volume.

5. Procédé de préparation de fibres carbonées à croissance en phase gazeuse selon la revendication 3, dans lequel le composé métallique comprend un ou plusieurs éléments métalliques choisis dans le groupe constitué par le scandium, le titane, le vanadium, le chrome, le manganèse, le fer, le cobalt, le nickel, l'yttrium, le zirconium, le niobium, le molybdène, le ruthénium, le rhodium, le palladium, le tantale, le tungstène, le rhénium, l'iridium et le platine.

6. Procédé de préparation de fibres carbonées à croissance en phase gazeuse selon la revendication 3, dans lequel le composé métallique comprend un ou plusieurs éléments métalliques choisis parmi les éléments appartenant au groupe VIII de la classification périodique.

7. Procédé de préparation de fibres carbonées à croissance en phase gazeuse selon la revendication 3, dans lequel le composé métallique comprend un ou plusieurs éléments métalliques choisis dans le groupe constitué par le fer, le cobalt et le nickel.

8. Procédé de préparation de fibres carbonées à croissance en phase gazeuse selon la revendication 3, dans lequel le composé métallique est un composé au fer.

9. Procédé de préparation de fibres carbonées à croissance en phase gazeuse selon la revendication 3, dans lequel le composé métallique comprend un ou plusieurs composés choisis dans le groupe constitué par $(C_5H_5)_2Fe$, $FeCl_3$ et $Fe(CO)_5$.

10. Procédé de préparation de fibres carbonées à croissance en phase gazeuse selon la revendication 3, dans lequel le composé métallique est $Fe(CO)_5$.

11. Procédé de préparation de fibres carbonées à croissance en phase gazeuse selon la revendication 3, dans lequel la température de croissance en phase gazeuse est de 550 à 800°C.

Figure 1

3 μ m

Figure 2a

1 µ m

Figure 2b

1 0 0 Å

Figure 3

Carbonaceous fiber

Figure 4

500 Å

Figure 5

0 . 3 μ m